# EUROPEAN PATENT SPECIFICATION

(11) **EP 3 506 424 B1**
(45) Date of publication and mention of the grant of the patent: **04.12.2024**
(21) Application number: 18210007.3
(22) Date of filing: 04.12.2018
(51) Int. Cl.: H01Q 1/28, H01Q 1/32, H01Q 13/02, H01Q 21/06, H01Q 21/20

(54) **UNMANNED VEHICLE RADAR SYSTEM**
RADARSYSTEM FÜR UNBEMANNTES FAHRZEUG
SYSTÈME DE RADAR DE VÉHICULE SANS PILOTE

(30) Priority: 26.12.2017 US 201715854605
(43) Date of publication of application: 03.07.2019
(73) Proprietor: NXP USA, Inc., Austin TX 78735 (US)
(72) Inventor: SELER, Ernst, 5656 AG Eindhoven (NL); TONG, Ziqiang, 5656 AG Eindhoven (NL)
(74) Representative: Hardingham, Christopher Mark

(56) References cited:
- CN-A- 106 450 782
- JP-A- 2012 167 956
- US-A1- 2004 085 249
- US-A1- 2009 303 147
- US-A1- 2010 087 967
- US-A1- 2012 084 968
- US-B1- 9 478 865

## Description

### TECHNICAL FIELD

The embodiments described herein generally relate to unmanned vehicles, and in particular, the use of radar systems for guiding unmanned vehicles.

### BACKGROUND

Unmanned vehicles are used in a variety of applications. For example, unmanned aerial vehicles (commonly referred to as "drones") are increasingly used in a variety of recreational activities. Unmanned aerial vehicles are also used for a variety of commercial activities, including professional photography, mapping and delivery. Unmanned land vehicles are likewise increasingly used for cleaning, delivery and manufacturing.

One continuing issue with unmanned vehicles is the need for avoiding obstacles while moving. For example, unmanned aerial drones may need to avoid collisions with other flying objects, and may need to avoid stationary hazards such as trees, buildings and powerlines. Likewise, unmanned land vehicles may need to maneuver around both stationary and moving objects, including people. These unmanned land vehicles may also need to navigate through crowded buildings. In each case there is a need for the unmanned vehicle to locate and avoid potential obstacles while moving.

Furthermore, in many applications there is a need to provide such functionality without requiring excessive weight or power consumption.

US 2010/087967 A1 describes a radar system including a plurality of antenna sub-systems, each operable to transmit and receive radio frequency (RF) signals in a corresponding sector, wherein the plurality of antenna sub-systems are positioned such that the corresponding sectors cover a total range of about 180 degrees to about 360 degrees without rotation of the radar system. The radar system also comprises shared backend circuitry coupled to each of the plurality of antenna sub-systems and operable to process signals from each of the plurality of antenna sub-systems to detect the presence of an obstacle in one of the corresponding sectors.

US 2009/303147 A1 describes planar, sectorized, millimeter-wave antenna arrays that may include one or more of housings of dielectric material, such as split-blocks of a plastic material, having metallized plastic horns and waveguides formed, etched, and/or cut therein, waveguide-to-planar-transmission-line transition devices and planar structures embedded therein, and one or more integrated circuits coupled thereto.

### SUMMARY

According to an aspect of this disclosure, there is provided an unmanned vehicle, comprising:
a housing, the housing including at least one propulsion motor;
a radar processing unit coupled to the housing; and
an antenna, the antenna including an antenna body defining at least one transmitting waveguide and at least one of receiving waveguide, wherein the antenna body is formed as part of the housing, is formed from plastic and has a metallized surface, the at least one of transmitting waveguide and at least one of receiving waveguide coupled to the radar processing unit.

In one or more embodiments, the antenna body may have an exterior shape configured to provide a semispherical field of view for radar signals generated by the radar processing unit and transmitted by the antenna body.

In one or more embodiments, the antenna body may have an exterior shape configured to provide a spherical field of view for radar signals generated by the radar processing unit and transmitted by the antenna body.

In one or more embodiments, the antenna body may have a semispherical exterior shape.

In one or more embodiments, the antenna body may have a modified polyhedron exterior shape.

In one or more embodiments, the antenna body may be formed with 3D printing.

In one or more embodiments, the antenna body may be formed with injection molding.

In one or more embodiments, the metalized surface may be formed by metallic deposition.

In one or more embodiments, the unmanned vehicle may further comprise a second antenna, the second antenna having a second antenna body defining at least one second transmitting waveguide and at least one second receiving waveguide, the second antenna body formed from plastic and having a second metallized surface, the at least one second transmitting waveguide and at least one second receiving waveguide coupled to the radar processing unit.

In one or more embodiments, the antenna body may be coupled to a top side of the housing and the second antenna body may be coupled to a bottom side of the housing.

In one or more embodiments, the antenna body may be coupled to a first side, wherein the second antenna body may be coupled to a second side opposite the first side.

In one or more embodiments, the unmanned vehicle may comprise an aerial drone.

In one or more embodiments, the unmanned vehicle may comprise a wheeled drone.

In an illustrative example, there is provided an unmanned vehicle comprising: a housing, the housing including at least one propulsion motor; a radar processing unit coupled to the housing; and an antenna, the antenna including an antenna body defining a plurality of transmitting waveguides and a plurality of receiving waveguides, the antenna body formed from plastic using a 3-dimensional (3D) printing process, the antenna body including a metallized surface, the plurality of transmitting waveguides and plurality of receiving waveguides coupled to the radar processing unit.

In one or more examples, the antenna body may have a modified polyhedron exterior shape configured to provide semispherical field of view for radar signals generated by the radar processing unit and transmitted by the antenna body.

In one or more examples, the antenna body may have a semispherical exterior shape configured to provide semispherical field of view for radar signals generated by the radar processing unit and transmitted by the antenna body.

In one or more examples, the unmanned vehicle may further comprise a second antenna, the second antenna having a second antenna body defining at least one transmitting waveguide and at least one of receiving waveguide, the second antenna body formed from plastic and having a second metallized surface, the at least one of transmitting waveguide and at least one of receiving waveguide coupled to the radar processing unit.

In one or more examples, the antenna body and the housing may be formed together with the 3D printing process.

### BRIEF DESCRIPTION OF THE DRAWINGS

FIG. 1 is a schematic diagram of an unmanned vehicle in accordance with an embodiment;
FIG. 2 is a side view of a radar system in accordance with an embodiment;
FIG. 3 is a cross-sectional side view of a radar system in accordance with an embodiment;
FIG. 4 is a cross-sectional side view of a radar system in accordance with an embodiment;
FIG. 5 is a side view of an unmanned aerial vehicle in accordance with an embodiment; and
FIG. 6 is a side view of an unmanned aerial vehicle in accordance with an embodiment.

### DETAILED DESCRIPTION

The embodiments described herein provide radar systems for use on unmanned vehicles. The radar systems can be applied to a wide variety of unmanned vehicles, including unmanned aerial vehicles and unmanned land vehicles. For example, the radar systems can be applied to aerial vehicles commonly referred to as drones or multi-copters. The radar systems can also be applied to a variety of unmanned land vehicles, including ground based recreational or commercial vehicles. For example, the radar systems can be applied to automated delivery or cleaning devices.

In general, the unmanned vehicle includes a housing having at least one propulsion motor, a radar processing unit coupled to the body, and an antenna. In accordance with the embodiments described herein, the antenna includes an antenna body defining at least one transmitting waveguide and at least one receiving waveguide coupled to the radar processing unit. The antenna body is formed from plastic and includes metalized surface. In one embodiment, the antenna body is formed from 3-dimensional (3D) plastic printing. The metalized coating can then be applied to the surface of the antenna body, including the surfaces of the waveguides.

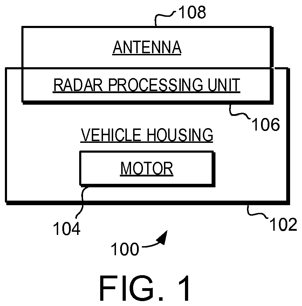

Turning now to FIG. 1, a schematic view of an unmanned vehicle 100 is illustrated. The unmanned vehicle 100 includes a vehicle housing 102, a motor 104, a radar processing unit 106, and an antenna 108.

The unmanned vehicle 100 can be any type of unmanned vehicle, including various types of unmanned aerial vehicles and unmanned land vehicles. Likewise, the housing 102 can be any type of suitable housing for the unmanned vehicle 100. The motor 104 can be any type of suitable motor that can provide propulsion to the unmanned vehicle 100. For example, the housing 102 and motor 104 can include a housing body and motor suitable for a multi-copter. In other examples, the housing 102 and motor 104 can include a housing body and motor suitable for a wheeled delivery drone. It should be noted that in many applications the unmanned vehicle 100 can include multiple motors 104. Additionally, the unmanned vehicle 100 can include a variety of other features, including batteries, cameras, etc.

In accordance with the embodiments described herein, the unmanned vehicle 100 includes the radar processing unit 106 and the antenna 108. In general, the antenna 108 includes an antenna body defining at least one transmitting waveguide and at least one receiving waveguide coupled to the radar processing unit 106. Thus, during operation the radar processing unit 106 transmits and receives radar signals through the transmitting and receiving waveguides. The antenna 108 and its included waveguides thus define the field of view for the radar system. In one embodiment the antenna body is formed using 3-dimenesional (3D) printing of plastic. In other embodiments the antenna body is molded using any suitable molding technique. Both 3D printing and molding can thus be used to define an antenna body with the waveguide structures needed for the desired radar field of view. When so constructed the radar processing unit 106 and antenna 108 can transmit and receive radar signals through the waveguides and use those signals to provide for navigation and obstacle avoidance in the unmanned vehicle 100.

In one embodiment the antenna body has an exterior shape configured to provide semispherical field of view for radar signals generated by the radar processing unit and transmitted by the antenna body. In another embodiment the antenna body has an exterior shape configured to provide full spherical field of view. For example, the antenna body can have a semispherical or hemispherical shape exterior shape to provide such a partial or full field of view. In other embodiments the antenna body can have a partial or modified polyhedron shape to provide such a partial or full field of view.

In some applications multiple antennas 108 can be used on one unmanned vehicle 100. For example, multiple antennas 108 with a semispherical field of view scan can be implemented together on the vehicle 100 and configured to provide a spherical field of view or 360 degree circular field of view around the unmanned vehicle 100.

In one embodiment, a first antenna 108 is positioned on the top side of the housing 102, while a second antenna 108 is positioned on the bottom side of housing 102. Such a configuration can provide a full up and down view for an unmanned aerial vehicle. In another embodiment, a first antenna 108 is positioned on the left side of the housing 102, while a second antenna 108 is positioned on the right side of housing 102. Such a configuration can provide a full or nearly full 360 degree view for an unmanned land vehicle.

In one embodiment, the antenna body is formed together with other elements of the unmanned vehicle 100. The antenna body is formed as part of the housing 102. In this example, the antenna body, including the exterior shape and the transmitting and receiving waveguides can be formed with the same processes used to form the housing 102. As one specific example, the housing 102 and the antenna body can be formed together using 3D printing. As another specific example, the housing 102 and the antenna body can be formed together using injection molding. In both cases the plastics used to define the exterior shape and the transmitting and receiving waveguides can be defined with the same processes used to define the shapes structures of the unmanned vehicle 100.

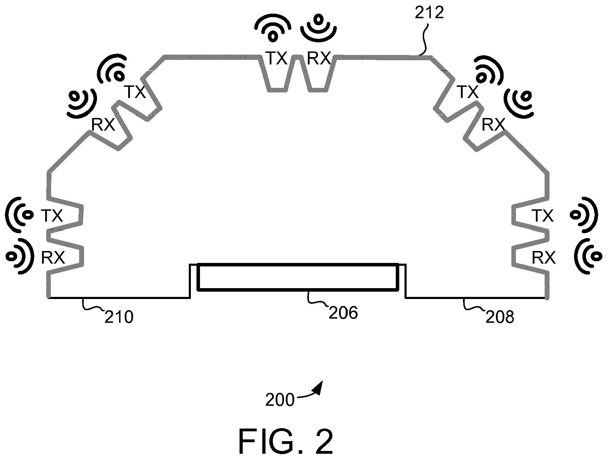

Turning now to FIG. 2, a side view of an exemplary radar system 200 is illustrated. The radar system 200 includes a radar processing unit 206 and an antenna 208. The radar system 200 is exemplary of the type of radar system that can be implemented on an unmanned vehicle, including pilotless aerial vehicles such as multi-copters.

The antenna 208 includes an antenna body 210 and a metalized surface 212. The antenna body 210 defines a plurality of transmitting waveguides and a plurality of receiving waveguides coupled to the radar processing unit 206. The transmitting waveguides are coupled to transmitting outputs (TX) and the receiving waveguides are coupled to receiving inputs (RX). The configuration of the waveguides and the distribution of the transmitting outputs (TX) and the receiving inputs (RX) determine the define the field of view of the radar system. The metalized surface 212 provides the conductivity needed for transmitting electromagnetic waves from the antenna 208.

Again, the antenna body 210 can be 3D printed from any suitable plastic material. Likewise, the metalized surface 212 of the antenna body 210 can be metalized using suitable metallic materials and any suitable deposition or coating process. In other embodiments the antenna body is injection molded. The use of a plastic antenna body 210 having a metalized surface 212 and defining transmitting and receiving waveguides can provide the antenna 208 with a very low relative weight. Such a low weight is particularly important in unmanned aerial vehicles such as multi-copters and other types of drones.

Furthermore, the use of a 3D printed or injection molded plastic antenna body can provide an antenna body with the waveguide structures needed for the desired radar field of view. In the embodiment of FIG. 2 the antenna body 210 has a partial polyhedron shape. This shape allows the different transmitting ports (TX) to transmit the radar signals in different directions. Likewise, the different receiving ports (RX) can receive the reflected radar signals from different directions. Taken together, the partial polyhedron shape can provide semispherical field of view for radar signals generated by the radar processing unit 206 and transmitted out the transmitting ports (TX) and received by the receiving ports (RX).

The radar processing unit 206 can include any suitable type of radar processing unit. Specifically, the radar processing unit 206 can include one or more packaged integrated circuits configured to generate and receive radar signals. In a typical embodiment the radar processing unit 206 can be configured to include multiple transmission channels and multiple receiver channels, and can thus facilitate multiple-input multiple-output (MIMO) radar operation.

As one specific example, the radar processing unit 206 can be implemented to provide a frequency-modulated continuous-wave (FMCW) radar. Such a radar can use an exemplary frequency band of 70-90 GHz and a chirp bandwidth of up to 2GHz. Again, this is just one example and other implementations can also be used.

The radar processing unit 206 can include a variety of different circuits and devices to facilitate radar operation. For example, the radar processing unit 206 can include a variety of filters, analog-to-digital converters (ADCs), monitoring circuits, etc. In most applications it will be desirable to use a radar processing unit 206 with relatively low power requirements.

In typical embodiment the radar processing unit 206 will be implemented as a packaged integrated circuit. Such a packaged integrated circuit can use a variety of package lead technologies, including various types of pins, wire leads and ball grid arrays (BGAs). In such an example the package leads would provide the input and output interfaces for coupling to other devices on the unmanned vehicle. Additionally, the package leads can provide the interface between the antenna 208 and each of the transmission and receiver channels on the radar processing unit 206.

As one specific example, the interface between the radar processing unit 206 and the antenna 208 can be realized as a chip-package-waveguide transition. As another example, the interface between the radar processing unit 206 and the antenna 208 can be realized as a chip-package-PCB-waveguide transition. In each of these examples the leads of the packaged radar processing unit 206 are coupled to the transmitting and receiving waveguides of the antenna 208. This connection can be direct, or it can be implemented through intermediate features such as PCB's and other waveguides.

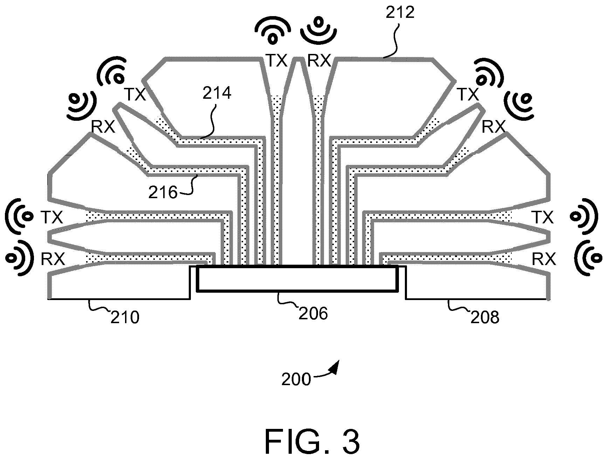

Turning now to FIG. 3, a cross-sectional side view of the radar system 200 is illustrated. This cross-sectional side view shows the plurality of transmitting waveguides 214 and receiving waveguides 216 that are defined in the antenna body 210. In this example, there are an equal number of transmitting waveguides 214 and receiving waveguides 216. However, that is just one example implementation.

Each of the transmitting waveguides 214 and receiving waveguides 216 provides a connection to the corresponding transmitting and receiving I/O on the radar processing unit 206. As one example, each of the waveguides 214 and 216 can be connected to the radar processing unit 206 through a chip-package-waveguide transition structure.

Again, the antenna body 210 includes a metalized surface 212. As can be seen in FIG. 3, the interior walls of the transmitting waveguides 214 and receiving waveguides 216 include the metalized surface 212. This metalized surface 212 on the walls of the transmitting waveguides 214 and the receiving waveguides 216 provides the conductivity needed for transmitting electromagnetic waves from the radar processing unit 206 to the transmitting outputs (TX) and from the receiving inputs (RX) to the radar processing unit 206.

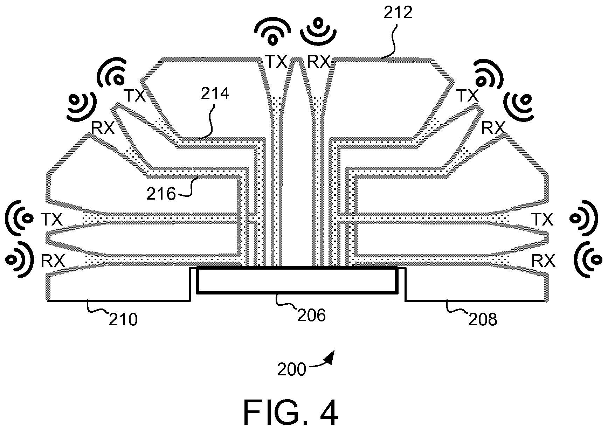

Turning now to FIG. 4, a second cross-sectional side view of the radar system 200 is illustrated. Like FIG. 3, this cross-sectional view shows the plurality of transmitting waveguides 214 and receiving waveguides 216 that are defined in the antenna body 210. However, in this example several of the transmitting waveguides 214 and the receiving waveguides 216 are shared. Specifically, multiple transmitting waveguides 214 are connected to one transmitting output of the radar processing unit 206. Likewise, multiple receiving waveguides 216 are connected to one receiving input of the radar processing unit 206. Thus, in this implementation some of the input and output channels of the radar processing unit 206 are split into multiple antenna outputs and inputs. Such an embodiment can thus be used where the transmitting and receiving channels are limited, or where simply more transmitting ports (TX) and receiving ports (RX) are needed to provide the fully desired field of view for the radar system 200.

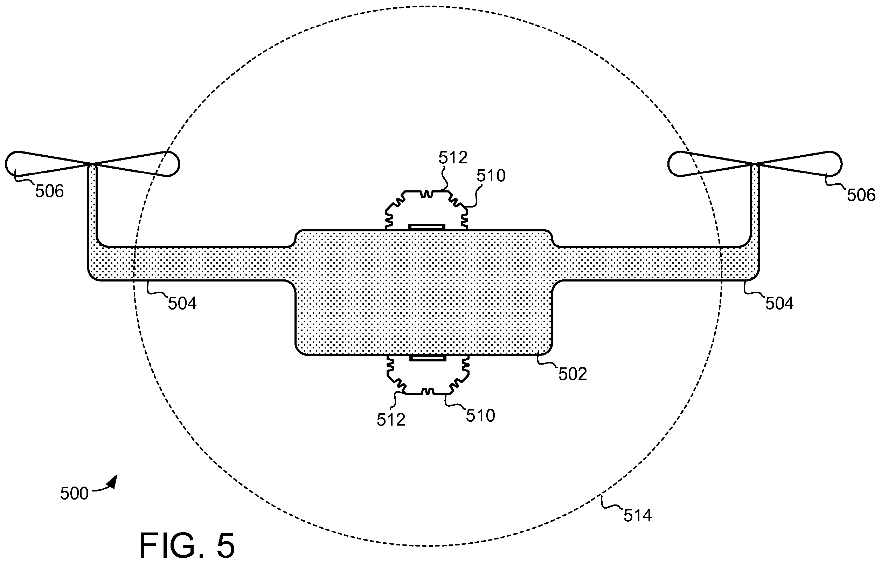

As was described above, the radar systems described herein can be applied to a wide variety of unmanned vehicles, including various types of pilotless drones. Turning now to FIG. 5, a simplified side view of an exemplary unmanned aerial vehicle 500 is illustrated. The aerial vehicle 500 includes a vehicle housing 502 and propulsion motors 504. In this example, the aerial vehicle 500 is a multi-copter type drone device that has multiple propellers 506 driven by the propulsion motors 504.

In accordance with the embodiments described herein, the aerial vehicle 500 also includes two radar systems 510. Each of the radar systems 510 includes an antenna body 512. These antenna bodies 512 each define at least one transmitting waveguide and at least one receiving waveguide. These waveguides are coupled to one or more radar processing units (not shown in FIG. 5). Thus, during operation, the radar systems 510 each transmit and receive radar signals through the transmitting and receiving waveguides of the antenna bodies 512. The antenna bodies 512 their included waveguides thus define the field of views for the radar systems 510.

In this embodiment each of the radar systems 510 defines a substantially semispherical field of view. With one antenna body 512 mounted at the top of the vehicle housing 502 and the other antenna body 512 mounted at the bottom of the vehicle housing 502, the two antenna bodies 512 together can provide near full spherical view as represented by the dashed line 514.

Again, because the antenna bodies 512 can be implemented in plastic with a conductive metallic coating, such antenna systems 510 can provided with relatively little weight. Thus, the radar systems 510 can provide improved vehicle navigation and obstacle detection without excessive weight added to the vehicle 500.

The antenna bodies 512 are formed together with the vehicle housing 502. In this example, the antenna bodies 512, including the exterior shape and the transmitting and receiving waveguides can be defined with the same processes used to form the vehicle housing 502. Stated another way, the exterior shape waveguides is implemented as part of the vehicle housing 502. As one specific example, the vehicle housing 502 and the antenna bodies 512 can be formed as part of the same 3D printing process. As another specific example, the vehicle housing 502 and the antenna bodies 512 can be formed together as part of the same plastic molding process. These embodiments can simplify manufacturing of the unmanned vehicle 500 by not requiring the use of separate procedures and fasteners to affix the antenna bodies 512 to the vehicle housing 502. Furthermore, not requiring adhesives or other fasteners can further reduce the weight of the overall unmanned vehicle 500.

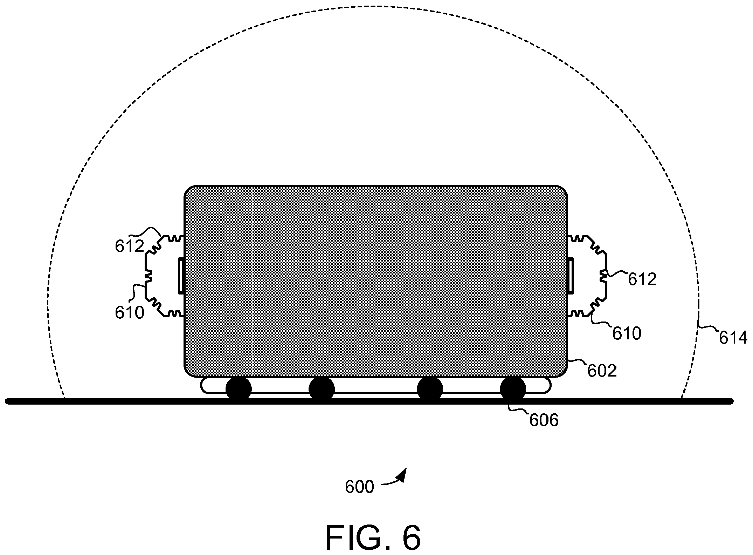

Turning now to FIG. 6, a simplified side view of an exemplary unmanned land vehicle 600 is illustrated. The land vehicle 600 includes vehicle housing 502 and propulsion motors (not shown in FIG. 6). In this example, the land vehicle 600 is a wheeled device that has multiple wheels 606.

In accordance with the embodiments described herein, the land vehicle 600 also includes two radar systems 610. Each of the radar systems 610 includes an antenna body 612. These antenna bodies 612 each define at least one transmitting waveguide and at least one receiving waveguide. These waveguides are coupled to one or more radar processing units (not shown in FIG. 6). Thus, during operation, the radar systems 610 each transmit and receive radar signals through the transmitting and receiving waveguides of the antenna bodies 612. The antenna bodies 612 their included waveguides thus define the field of views for the radar systems 610.

In this embodiment each of the radar systems 610 defines a semispherical field of view. With one antenna body 612 mounted at one side of the vehicle housing 602 and the other antenna body 612 mounted at the opposite side of the vehicle housing 602, the two antenna bodies 612 together can provide near 360 degree view as represented by the dashed line 614.

The antenna bodies 512 are formed together with the vehicle housing 502, using the same processes and materials.

Again, because the antenna bodies 612 can be implemented in plastic, with a conductive coating, such antenna systems 610 can provided with relatively little weight. Thus, the radar systems 610 can again provide improved vehicle navigation and obstacle detection without excessive weight added to the land vehicle 600.

The embodiments described herein thus provide radar systems for use on unmanned vehicles. The radar systems can be applied to a wide variety of unmanned vehicles, including unmanned aerial vehicles and unmanned land vehicles. In general, the unmanned vehicle includes a housing having at least one propulsion motor, a radar processing unit coupled to the body, and an antenna. In accordance with the embodiments described herein, the antenna includes an antenna body defining at least one transmitting waveguide and at least one receiving waveguide coupled to the radar processing unit. The antenna body is formed from plastic and includes metalized surface. In one embodiment, the antenna body is formed from 3-dimensional (3D) plastic printing.

In one embodiment, an unmanned vehicle is provided, including: a housing, the housing including at least one propulsion motor; a radar processing unit coupled to the housing; and an antenna, the antenna having an antenna body defining at least one transmitting waveguide and at least one of receiving waveguide, the antenna body formed from plastic and having a metallized surface, the at least one of transmitting waveguide and at least one of receiving waveguide coupled to the radar processing unit.

In another embodiment, an unmanned vehicle is provided, including: a housing, the housing including at least one propulsion motor; a radar processing unit coupled to the housing; and an antenna, the antenna including an antenna body defining a plurality of transmitting waveguides and a plurality of receiving waveguides, the antenna body formed from plastic using a 3-dimensional (3D) printing process, the antenna body including a metallized surface, the plurality of transmitting waveguides and plurality of receiving waveguides coupled to the radar processing unit.

In another embodiment, a pilotless aerial drone is provided, including: a housing, the housing including at least one propulsion motor; a radar processing unit coupled to the housing; a first antenna coupled to a first surface of the housing, the first antenna including a first antenna body with a first exterior surface shape, the first antenna body defining a first plurality of transmitting waveguides and a first plurality of receiving waveguides, the first antenna body formed from plastic and having a first metallized surface, the first plurality of transmitting waveguides and first plurality of receiving waveguides coupled to the radar processing unit; a second antenna coupled to a second surface of the housing opposite the first surface, the second antenna including a second antenna body with a second exterior surface shape, the second antenna body defining a second plurality of transmitting waveguides and a second plurality of receiving waveguides, the second antenna body formed from plastic and having a second metallized surface, second first plurality of transmitting waveguides and second plurality of receiving waveguides coupled to the radar processing unit; and wherein the first exterior shape and the second exterior shape are configured to provide a combined spherical field of view for radar signals generated by the radar processing unit and transmitted by the first antenna body and the second antenna body.

The embodiments described herein provide radar systems for use on unmanned vehicles. The radar systems can be applied to a wide variety of unmanned vehicles, including unmanned aerial vehicles and unmanned land vehicles. In general, the unmanned vehicle comprises a housing having at least one propulsion motor, a radar processing unit coupled to the body, and an antenna. In accordance with the embodiments described herein, the antenna includes an antenna body defining at least one transmitting waveguide and at least one receiving waveguide coupled to the radar processing unit. The antenna body is formed from plastic and includes metalized surface. In one embodiment, the antenna body is formed from 3-dimensional (3D) plastic printing.

In the foregoing specification, the invention has been described with reference to specific embodiments of the invention. It will, however, be evident that various modifications and changes may be made therein without departing from the scope of the invention as set forth in the appended claims. For example, the connections may be any type of connection suitable to transfer signals from or to the respective nodes, units or devices, for example via intermediate devices.

Accordingly, unless implied or stated otherwise the connections may for example be direct connections or indirect connections. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an."

The terms "first," "second," "third," "fourth" and the like in the description and the claims are used for distinguishing between elements and not necessarily for describing a particular structural, sequential or chronological order. It is to be understood that the terms so used are interchangeable under appropriate circumstances. Furthermore, the terms "comprise," "include," "have" and any variations thereof, are intended to cover non-exclusive inclusions, such that a circuit, process, method, article, or apparatus that comprises a list of elements is not necessarily limited to those elements, but may include other elements not expressly listed or inherent to such circuit, process, method, article, or apparatus. The term "coupled," as used herein, is defined as directly or indirectly connected in an electrical or non-electrical manner.

While the principles of the inventive subject matter have been described above in connection with specific systems, apparatus, and methods, it is to be clearly understood that this description is made only by way of example and not as a limitation on the scope of the inventive subject matter. The various functions or processing blocks discussed herein and illustrated in the Figures may be implemented in hardware, firmware, software or any combination thereof. Further, the phraseology or terminology employed herein is for the purpose of description and not of limitation.

The foregoing description of specific embodiments reveals the general nature of the inventive subject matter sufficiently that others can, by applying current knowledge, readily modify and/or adapt it for various applications without departing from the general concept.

## Claims

1. An unmanned vehicle (100, 500, 600), comprising:
a housing (102, 502), the housing including at least one propulsion motor (104, 504);
a radar processing unit (106, 206) coupled to the housing; and
an antenna (108, 208), the antenna including an antenna body (210) defining at least one transmitting waveguide and at least one-of receiving waveguide, wherein the antenna body is formed as part of the housing, is formed from plastic and has a metallized surface (212), the at least one transmitting waveguide (214) and at least one-of receiving waveguide (216) coupled to the radar processing unit.

2. The unmanned vehicle of claim 1, wherein the antenna body has an exterior shape configured to provide a semispherical field of view for radar signals generated by the radar processing unit and transmitted by the antenna body.

3. The unmanned vehicle of claim 1, wherein the antenna body has an exterior shape configured to provide a spherical field of view for radar signals generated by the radar processing unit and transmitted by the antenna body.

4. The unmanned vehicle of any preceding claim, wherein the antenna body has a semispherical exterior shape.

5. The unmanned vehicle of any of claims 1 to 3, wherein the antenna body has a modified polyhedron exterior shape.

6. The unmanned vehicle of any preceding claim, wherein the antenna body is formed with 3D printing.

7. The unmanned vehicle of any of claims 1 to 5, wherein the antenna body is formed with injection molding.

8. The unmanned vehicle of any preceding claim, wherein the metalized surface is formed by metallic deposition.

9. The unmanned vehicle of any preceding claim, further comprising a second antenna, the second antenna having a second antenna body defining at least one second transmitting waveguide and at least one second receiving waveguide, the second antenna body formed from plastic and having a second metallized surface, the at least one second transmitting waveguide and at least one second receiving waveguide coupled to the radar processing unit.

10. The unmanned vehicle of claim 9, wherein the antenna body is coupled to a top side of the housing and the second antenna body is coupled to a bottom side of the housing.

11. The unmanned vehicle of claim 9, wherein the antenna body is coupled to a first side, wherein the second antenna body is coupled to a second side opposite the first side.

12. The unmanned vehicle of any preceding claim, wherein the unmanned vehicle comprises an aerial drone.

13. The unmanned vehicle of any of claims 1 to 11, wherein the unmanned vehicle comprises a wheeled drone.

## Patentansprüche

1. Unbemanntes Fahrzeug (100, 500, 600), das Folgendes umfasst:
ein Gehäuse (102, 502), wobei das Gehäuse mindestens einen Antriebsmotor (104, 504) beinhaltet;
eine Radarverarbeitungseinheit (106, 206), die an das Gehäuse gekoppelt ist; und
eine Antenne (108, 208), wobei die Antenne einen Antennenkörper (210) beinhaltet, der mindestens einen Übertragungslichtwellenleiter und mindestens einen Empfangslichtwellenleiter definiert, wobei der Antennenkörper als Teil des Gehäuses gebildet ist, aus Kunststoff gebildet ist und eine metallisierte Oberfläche (212) aufweist, wobei der mindestens eine Übertragungslichtwellenleiters (214) und der mindestens eine Empfangslichtwellenleiters (216) an die Radarverarbeitungseinheit gekoppelt ist.

2. Unbemanntes Fahrzeug nach Anspruch 1, wobei der Antennenkörper eine äußere Form aufweist, die dazu ausgelegt ist, ein halbkugelförmiges Sichtfeld für Radarsignale bereitzustellen, die von der Radarverarbeitungseinheit erzeugt und vom Antennenkörper übertragen werden.

3. Unbemanntes Fahrzeug nach Anspruch 1, wobei der Antennenkörper eine äußere Form aufweist, die dazu ausgelegt ist, ein kugelförmiges Sichtfeld für Radarsignale bereitzustellen, die von der Radarverarbeitungseinheit erzeugt und vom Antennenkörper übertragen werden.

4. Unbemanntes Fahrzeug nach einem der vorhergehenden Ansprüche, wobei der Antennenkörper eine halbkugelförmige äußere Form aufweist.

5. Unbemanntes Fahrzeug nach einem der Ansprüche 1 bis 3, wobei der Antennenkörper eine modifizierte äußere Polyederform aufweist.

6. Unbemanntes Fahrzeug nach einem der vorhergehenden Ansprüche, wobei der Antennenkörper mittels 3D-Druck gebildet ist.

7. Unbemanntes Fahrzeug nach einem der Ansprüche 1 bis 5, wobei der Antennenkörper mittels Spritzguss gebildet.

8. Unbemanntes Fahrzeug nach einem der vorhergehenden Ansprüche, wobei die metallisierte Oberfläche durch metallische Ablagerung gebildet ist.

9. Unbemanntes Fahrzeug nach einem der vorhergehenden Ansprüche, das ferner eine zweite Antenne umfasst, wobei die zweite Antenne einen zweiten Antennenkörper umfasst, der mindestens einen zweiten Übertragungslichtwellenleiter und mindestens einen zweiten Empfangslichtwellenleiter definiert, wobei der zweite Antennenkörper aus Kunststoff gebildet ist und eine zweite metallisierte Oberfläche aufweist, wobei der mindestens eine zweite Übertragungslichtwellenleiter und der mindestens eine zweite Empfangslichtwellenleiter an die Radarverarbeitungseinheit gekoppelt sind.

10. Unbemanntes Fahrzeug nach Anspruch 9, wobei der Antennenkörper an eine Oberseite des Gehäuses gekoppelt ist und der zweite Antennenkörper an eine Unterseite des Gehäuses gekoppelt ist.

11. Unbemanntes Fahrzeug nach Anspruch 9, wobei der Antennenkörper an eine erste Seite gekoppelt ist, wobei der zweite Antennenkörper an eine zweite Seite gegenüber der ersten Seite gekoppelt ist.

12. Unbemanntes Fahrzeug nach einem der vorhergehenden Ansprüche, wobei das unbemannte Fahrzeug eine Flugdrohne umfasst.

13. Unbemanntes Fahrzeug nach einem der Ansprüche 1 bis 11, wobei das unbemannte Fahrzeug eine Drohne auf Rädern umfasst.

## Revendications

1. Véhicule sans pilote (100, 500, 600), comprenant :
un logement (102, 502), le logement incluant au moins un moteur de propulsion (104, 504) ;
une unité de traitement radar (106, 206) couplée au logement ; et
une antenne (108, 208), l'antenne incluant un corps d'antenne (210) définissant au moins un guide d'ondes d'émission et au moins un guide d'ondes de réception, le corps d'antenne étant formé en tant que partie du logement, étant formé à partir de plastique et ayant une surface métallisée (212), l'au moins un guide d'ondes d'émission (214) et l'au moins un guide d'ondes de réception (216) étant couplés à l'unité de traitement radar.

2. Véhicule sans pilote selon la revendication 1, dans lequel le corps d'antenne a une forme extérieure configurée pour fournir un champ de vision semi-sphérique pour des signaux radar générés par l'unité de traitement radar et émis par le corps d'antenne.

3. Véhicule sans pilote selon la revendication 1, dans lequel le corps d'antenne a une forme extérieure configurée pour fournir un champ de vision sphérique pour des signaux radar générés par l'unité de traitement radar et émis par le corps d'antenne.

4. Véhicule sans pilote selon l'une quelconque des revendications précédentes, dans lequel le corps d'antenne a une forme extérieure semi-sphérique.

5. Véhicule sans pilote selon l'une quelconque des revendications 1 à 3, dans lequel le corps d'antenne a une forme extérieure de polyèdre modifié.

6. Véhicule sans pilote selon l'une quelconque des revendications précédentes, dans lequel le corps d'antenne est formé par impression 3D.

7. Véhicule sans pilote selon l'une quelconque des revendications 1 à 5, dans lequel le corps d'antenne est formé par moulage par injection.

8. Véhicule sans pilote selon l'une quelconque des revendications précédentes, dans lequel la surface métallisée est formée par dépôt métallique.

9. Véhicule sans pilote selon l'une quelconque des revendications précédentes, comprenant en outre une deuxième antenne, la deuxième antenne ayant un deuxième corps d'antenne définissant au moins un deuxième guide d'ondes d'émission et au moins un deuxième guide d'ondes de réception, le deuxième corps d'antenne étant formé à partir de plastique et ayant une deuxième surface métallisée, l'au moins un deuxième guide d'ondes d'émission et l'au moins un deuxième guide d'ondes de réception étant couplés à l'unité de traitement radar.

10. Véhicule sans pilote selon la revendication 9, dans lequel le corps d'antenne est couplé à un côté supérieur du logement et le deuxième corps d'antenne est couplé à un côté inférieur du logement.

11. Véhicule sans pilote selon la revendication 9, dans lequel le corps d'antenne est couplé à un premier côté, dans lequel le deuxième corps d'antenne est couplé à un deuxième côté opposé au premier côté.

12. Véhicule sans pilote selon l'une quelconque des revendications précédentes, le véhicule sans pilote comprenant un drone aérien.

13. Véhicule sans pilote selon l'une quelconque des revendications 1 à 11, le véhicule sans pilote comprenant un drone à roues.
